# DEMANDE DE BREVET EUROPEEN

(11) **EP 3 300 981 A1**
(43) Date de publication de la demande: **04.04.2018**
(21) Numéro de dépôt: 17193509.1
(22) Date de dépôt: 27.09.2017
(51) Int. Cl.: B60W 50/14, B62D 15/02

(54) **DISPOSITIF D'AIDE À L ORIENTATION DES ROUES D'UN VÉHICULE**

(30) Priorité: 28.09.2016 FR 1659201
(71) Demandeur: Valeo Vision, 93012 Bobigny Cedex (FR)
(72) Inventeur: BARILLOT, Thibaud, 93012 BOBIGNY Cedex (FR); STEFURA, Eric, 93012 BOBIGNY Cedex (FR)
(74) Mandataire: Valeo Vision

(57) **Abrégé**

L'invention concerne un dispositif d'aide à la conduite d'un véhicule automobile (1), caractérisé en ce qu'il comprend une unité de traitement (3) configurée pour calculer la position angulaire (41) d'au moins une roue (5) du véhicule (1) par rapport à une position angulaire de référence (40), et pour générer un signal lumineux (8) représentatif de la position angulaire de ladite au moins une roue (5) par rapport à la position de référence (40).

L'invention concerne également un procédé d'aide à la conduite d'un véhicule automobile (1) équipé d'un tel dispositif, un tel procédé comportant une étape de définition, au sein de l'unité de traitement (3), d'un axe de référence (4), une étape de définition, au sein de l'unité de traitement (3), de la position de référence (40), une étape de calcul, au sein de l'unité de traitement (3), de la position angulaire d'au moins une roue (5) du véhicule (1) par rapport à la position de référence (40), et une étape de génération, au sein de l'habitacle du véhicule (1), d'un signal lumineux (8) représentatif de la position angulaire de ladite au moins une roue (5) par rapport à la position de référence (40).

## Description

La présente invention se rapporte au domaine des dispositifs d'aide à la conduite d'un véhicule automobile.

Lors d'un certain nombre de manoeuvres, dont, par exemple, des manoeuvres de stationnement, il est important, pour le conducteur, de connaître aussi précisément que possible le positionnement de son véhicule par rapport aux véhicules avoisinants ou par rapport à divers obstacles (bordure, plots de délimitation de places de stationnement, etc.. Pour ce faire, certains dispositifs, connus, mettent en oeuvre de caméras ou d'autres détecteurs optiques configurés pour afficher, sur un écran de visualisation situé au sein de l'habitacle, une image des éléments situés dans le champ de détection de ces caméras et/ou détecteurs optiques. Certains de ces dispositifs comportent des ensembles de traitement de l'image permettant d'afficher, sur cet écran de visualisation, des informations représentatives de la trajectoire relative du véhicule par rapport aux obstacles concernés. D'autres dispositifs, également connus sous l'appellation de "radar de recul" mettent en oeuvre des moyens de détection dont le principe est basé sur l'émission et la réflexion d'ondes de type ultrasonore pour calculer la distance séparant le véhicule concerné de différents obstacles situés dans son environnement (autres véhicules ou autres).

De tels dispositifs fonctionnent essentiellement sur la base d'un calcul de la distance qui sépare le véhicule du ou des obstacles. Or, lors de manoeuvres complexes, par exemple lors de manoeuvres de stationnement ou de sortie de stationnement, le conducteur a souvent besoin de connaître de manière aussi précise que possible la position angulaire réelle des roues de son véhicule par rapport au véhicule lui-même et/ou par rapport à un ou plusieurs obstacles environnants et/ou par rapport à une trajectoire optimale pour la manoeuvre qu'il doit effectuer, afin d'anticiper au mieux la trajectoire du véhicule et les manoeuvres qu'il devra effectuer.

La présente invention a pour but d'apporter une solution nouvelle d'aide à la conduite des véhicules automobiles, en permettant au conducteur de connaître à tout moment et avec précision la position angulaire de son véhicule par rapport à une direction prédéfinie et/ou à un obstacle donné.

Un autre but de la présente invention est de faciliter la conduite d'un véhicule automobile, et notamment d'aider le conducteur à réaliser certaines manoeuvres difficiles.

Dans ce but, l'invention a pour objet un dispositif d'aide à la conduite d'un véhicule automobile comprenant une unité de traitement configurée pour calculer la position angulaire de l'une au moins des roues du véhicule par rapport à une position de référence prédéfinie. Préférentiellement, la position de référence est prédéfinie par l'unité de traitement.

Il est à noter que ladite au moins une roue dont la position angulaire est calculée par rapport à la position de référence est avantageusement une des roues directrices du véhicule : dans ce qui suit, le texte fera référence à "la roue" comme étant la ou les roues dont la position angulaire est calculée par l'unité de traitement relativement à la position de référence.

Pour définir la position de référence et pour calculer la position angulaire de la roue par rapport à ladite position de référence, l'unité de traitement comporte notamment des moyens de définition d'un axe de référence et des moyens de mesure de l'orientation de la roue dans l'espace. A titre d'exemple non exclusif, l'unité de traitement du dispositif selon l'invention peut ainsi mettre en oeuvre des moyens de mesure du type d'un ensemble de capteurs situés au niveau de l'ensemble de direction du véhicule, par exemple la colonne de direction, et/ou au niveau du volant de direction de ce véhicule, et notamment au niveau d'un cerclage et/ou d'un moyeu central dudit volant de direction. Il peut s'agir par exemple de codeurs angulaires, de capteurs optiques et, d'une manière générale, de tout type de capteur angulaire. L'unité de traitement peut également collaborer avec des moyens de localisation par satellite. Il peut s'agir des moyens de localisation par satellite utilisés pour l'assistance à la navigation du véhicule, ou d'autres moyens de localisation par satellite, distincts. L'unité de traitement comprend par exemple un microcontrôleur, un contrôleur et/ou un microprocesseur.

Selon un premier mode de réalisation et de mise en oeuvre de l'invention, la position de référence est définie comme étant la position d'alignement de ladite au moins une roue du véhicule avec l'axe de référence. En d'autres termes, la position de référence est définie, dans ce premier mode de réalisation, par l'axe de référence du véhicule. Dans le cas où l'axe de référence est un axe longitudinal du véhicule allant de l'arrière vers l'avant dudit véhicule, cette configuration avantageuse permet de définir la position angulaire des roues par rapport à cet axe du véhicule. Selon un mode de réalisation alternatif, cette position de référence est définie comme la position d'alignement de ladite au moins une roue du véhicule avec une direction de référence formant un angle prédéfini - préférentiellement non nul - avec l'axe de référence. En d'autres termes, la position de référence est définie, dans ce deuxième mode de réalisation, par une direction de référence angulairement distincte de l'axe de référence du véhicule, la direction de référence formant ainsi un axe secondaire de référence incliné par rapport à l'axe de référence. Dans le cas où l'axe de référence correspond à l'axe longitudinal du véhicule, cette configuration avantageuse permet de définir la position angulaire des roues par rapport à un autre axe de référence qui peut par exemple être défini par le conducteur. Cette configuration avantageuse permet aussi de définir la position angulaire des roues avec un certain décalage angulaire par rapport à l'axe de référence, le décalage angulaire étant défini par l'angle entre la direction de référence et l'axe de référence.

Selon différents modes de réalisation de l'invention, l'axe de référence peut être l'une des directions d'extension du véhicule : par exemple l'axe longitudinal ou l'axe transversal dudit véhicule. Éventuellement, l'axe de référence peut s'étendre selon une direction combinée entre l'axe longitudinal et l'axe transversal du véhicule.

Selon un mode de réalisation particulier de l'invention, l'unité de traitement est configurée pour communiquer avec une interface de dialogue agencée pour permettre au conducteur de choisir lui-même l'axe de référence. En d'autres termes, la position de référence est définie par l'unité de traitement sur la base d'une information communiquée par le conducteur du véhicule par le biais de l'interface de dialogue. Il peut s'agir, par exemple, d'une interface tactile située au niveau du poste de conduite et sur laquelle le conducteur peut visualiser son véhicule et son environnement immédiat. L'information communiquée par le conducteur peut par exemple être un angle qu'il souhaite définir entre les roues de son véhicule et l'axe de référence, l'axe obtenu à cette position angulaire formant la direction de référence.

Avantageusement, le dispositif selon l'invention comprend un système de détection d'obstacle. Il est à noter ici que le terme d'obstacle doit être compris au sens le plus large : il peut s'agir d'un ou plusieurs autres véhicules stationnés, au voisinage du ou desquels le véhicule équipé du dispositif selon l'invention doit se placer ou stationner, il peut s'agir d'éléments de voirie par rapport auxquels le véhicule équipé du dispositif selon l'invention doit se placer tel que par exemple une bordure de trottoir, ou il peut également s'agir de la chaussée elle-même. D'une manière générale, dans les paragraphes suivants de la présente description, le terme "obstacle" fera référence à un élément de l'environnement situé à proximité du véhicule équipé du dispositif d'aide à la conduite selon l'invention et par rapport auquel environnement ledit véhicule doit se placer et/ou se déplacer. Ce placement et/ou ce déplacement dans ledit environnement entraîne la configuration du véhicule selon au moins une orientation angulaire particulière d'au moins une de ses roues. Dans le contexte de la présente invention, on considère de manière préférentielle, mais non exclusive, que l'élément de l'environnement par rapport auquel le véhicule réalise la manoeuvre est immobile durant ladite manoeuvre.

Selon différents modes de réalisation, le système de détection d'obstacle comprend un ou plusieurs capteurs optiques, tels que des capteurs de position optiques agencé pour mesurer au moins une distance entre une partie du véhicule et l'obstacle, au moins une caméra pour mesurer au moins une partie de l'environnement situé à proximité du véhicule et/ou un ou plusieurs capteurs à ultrasons. Le système de détection d'obstacle collabore également avec des moyens de détection et de localisation par satellite, qu'il s'agisse des mêmes moyens de localisation par satellite que ceux utilisés, par ailleurs, par l'unité de traitement, ou qu'il s'agisse de moyens de détection et de localisation par satellite distincts de ceux utilisés par l'unité de traitement pour calculer la position angulaire de la roue par rapport à la position de référence.

Selon un mode de réalisation particulier de l'invention, l'unité de traitement est configurée pour définir l'axe de référence comme étant un axe d'extension de l'obstacle détecté par le système de détection. Un tel mode de réalisation peut être, par exemple, particulièrement avantageux lorsque le véhicule doit se placer et/ou se déplacer le long d'une bordure de trottoir non rectiligne, ou le long d'une bordure de trottoir rectiligne mais oblique par rapport à la chaussée. L'axe de référence permettant de définir la position de référence pourra alors être avantageusement choisi, selon différents modes de réalisation de l'invention, comme étant confondu avec la bordure rectiligne du trottoir, ou comme étant une tangente à une telle bordure non rectiligne. Par ailleurs, selon différents modes de réalisation de l'invention, cet axe de référence peut être défini par l'unité de traitement sur la base des informations qu'elle reçoit du système de détection et de ses propres moyens de localisation, ou par le conducteur lui-même via l'interface de dialogue précitée. Dans ce dernier cas, le conducteur peut par exemple définir lui-même l'axe de référence par rapport auquel il souhaite que les axes des roues soient référencés.

Selon l'invention, l'unité de traitement est également configurée pour générer, au sein de l'habitacle du véhicule, un signal représentatif de la position angulaire de l'au moins une roue du véhicule par rapport à la position de référence précédemment définie.

Avantageusement, ce signal est du type d'au moins un signal lumineux. Selon un mode de réalisation particulièrement avantageux de l'invention, ce signal lumineux est visible sur le volant de direction du véhicule, qu'il y soit émis par l'intermédiaire d'au moins une source lumineuse située sur ledit volant de direction, ou qu'il y soit projeté par des moyens de projection appropriés, par exemple situé au niveau du pavillon de l'habitacle du véhicule. À titre d'exemple non limitatif, un tel signal lumineux peut être généré sur un cerclage du volant de direction et/ou sur un moyeu central dudit volant de direction. Dans ce cas, afin de rendre aussi intuitive que possible son interprétation par le conducteur, ce signal lumineux est avantageusement généré en une région angulaire - notamment du volant de direction - représentative de la position angulaire de la roue par rapport à la position de référence. Par exemple, si la roue considérée est orientée selon un angle positif dans le sens trigonométrique par rapport à la position de référence définie par l'unité de traitement, le signal lumineux sera généré dans le deuxième quadrant angulaire du volant de direction, c'est-à-dire à gauche de l'axe médian vertical de ce volant de direction et au-dessus de l'axe médian horizontal passant par le moyeu du volant et perpendiculaire à l'axe médian vertical.De manière préférentielle, le signal lumineux est émis par une pluralité de sources lumineuses du type LED et situées sur le moyeu central et/ou le cerclage du volant de direction. En particulier, le moyeu et/ou le cerclage du volant de direction peut comprendre une pluralité de sources lumineuses alignées selon un secteur angulaire. En fonction de la position angulaire de l'au moins une roue par rapport à la position de référence, les sources lumineuses sont successivement allumées et/ou éteinte afin de représenter un secteur angulaire allumé ou éteint qui est représentatif de ladite position angulaire. D'une manière plus générale, la position angulaire peut être représentée par une modulation de l'intensité lumineuse des sources lumineuses. Alternativement ou complémentairement, la position angulaire peut être représentée par une modulation de la couleur des sources lumineuses.

Avantageusement également, ce signal lumineux comporte une première partie représentative de la position de référence, et une deuxième partie représentative de la position angulaire de l'au moins une roue par rapport à ladite position de référence. Le conducteur dispose ainsi à tout instant d'un élément de comparaison d'interprétation rapide et intuitive pour le guider dans ses manoeuvres. La première partie et la deuxième partie du signal lumineux peuvent être obtenues par un paramétrage différent des sources lumineuses représentant lesdites première et deuxième parties. À titre d'exemple non limitatif, le paramétrage différent peut porter sur l'intensité et/ou la couleur du signal lumineux émis par les sources lumineuses.

Selon un autre mode de réalisation, le signal lumineux est visible en une région de l'habitacle située dans le champ de vision du conducteur lorsque celui-ci effectue la manoeuvre considérée. Ainsi, à titre d'exemples non exhaustifs, ce signal lumineux pourra être visible en position sensiblement centrale du poste de conduite, face au conducteur, et/ou il pourra être projeté en une zone du pare-brise au moyen d'un système tels que ceux connus sous la dénomination de "vision tête haute". Éventuellement ou complémentairement, le signal lumineux est visible sur au moins une partie de la lunette arrière du véhicule afin de faciliter les opérations de manoeuvre du véhicule lorsque le conducteur effectue une marche arrière dudit véhicule.

En combinaison ou en complément, selon une autre caractéristique avantageuse de l'invention, la couleur du signal lumineux varie en fonction de la position angulaire de la roue par rapport à la position de référence : à cette fin, les moyens de génération du signal lumineux peuvent, par exemple, comprendre un ensemble de diodes électroluminescentes colorées dans la gamme connue sous la dénomination "RGB", acronyme anglais pour « Red, Green, Blue » faisant référence à des diodes électroluminescentes émettant une lumière respectivement rouge, verte, bleue. On pourra également prévoir une ou plusieurs LEDs de couleurs différentes, éventuellement des LEDs blanches, ou tout autre type de source lumineuse qui permet de faire varier cette couleur du signal lumineux en fonction de la position angulaire de la roue. On peut alors envisager que, pour une première plage prédéfinie de valeurs de la position angulaire de la roue considérée par rapport à la position de référence, le signal émis soit d'une première couleur, et que ce signal soit d'une deuxième couleur pour une deuxième plage prédéfinie de valeurs de la position angulaire de la roue considérée par rapport à la position de référence. D'une manière générale, au moins un paramètre visuel du signal lumineux varie en fonction du décalage angulaire entre l'au moins une roue et la position de référence. À titre d'exemples non limitatifs, le paramètre visuel du signal lumineux peut être du type d'une intensité lumineuse et/ou d'une couleur. Le décalage angulaire peut être subdivisé en une pluralité d'intervalles à l'intérieur desquels l'au moins un paramètre visuel du signal lumineux est modifié.

À titre d'exemple, le signal lumineux peut revêtir une première couleur lorsque le décalage angulaire entre l'au moins une roue et la position de référence se situe dans une première plage de valeurs et une deuxième couleur lorsque le décalage angulaire entre ladite au moins une roue et la position de référence se situe dans une deuxième plage de valeurs.

Selon un mode particulier de réalisation de l'invention, l'unité de traitement est configurée pour calculer la position angulaire de l'obstacle par rapport à la position de référence précédemment évoquée, et pour en déduire une orientation angulaire relative de l'obstacle et de la roue du véhicule au regard de cette position de référence. Selon ce mode particulier de réalisation, l'unité de traitement est alors avantageusement configurée pour générer, au sein de l'habitacle du véhicule, un signal lumineux représentatif de cette orientation relative de l'obstacle et du véhicule au regard de la position de référence.

Ainsi, selon différentes variantes de réalisation de l'invention :
- le signal lumineux représente l'écart entre la position relative de la roue et de l'obstacle et la position de référence,
- le signal lumineux représente l'écart entre la position relative de la roue et de l'obstacle et la position angulaire de l'obstacle.

L'invention s'étend également à un procédé d'aide à la conduite d'un véhicule équipé d'un dispositif d'aide à la conduite selon l'invention et tel qu'il vient d'être décrit.

Un tel procédé d'aide à la conduite comporte avantageusement au moins les étapes suivantes :
- une première étape de définition d'un axe de référence, par l'unité de traitement elle-même ou par le conducteur, par le biais d'une interface de dialogue configurée pour communiquer avec l'unité de traitement,
- une deuxième étape de définition par l'unité de traitement, de la position de référence. la position de référence peut être alternativement choisie parmi notamment une direction alignée avec l'axe de référence, ou une direction faisant, avec cet axe de référence, un angle prédéfini par l'unité de traitement ou par le conducteur, par le biais de l'interface de dialogue précitée,

- une troisième étape de calcul de la position angulaire d'au moins une roue du véhicule - avantageusement une roue directrice - par rapport à la position de référence ainsi définie,
- une quatrième étape de génération, au sein de l'habitacle du véhicule, d'un signal lumineux représentatif de la position angulaire de l'au moins une roue par rapport à cette position de référence.

Un tel procédé trouve une application particulièrement avantageuse lorsque le véhicule équipé du dispositif selon l'invention est stationné et lorsque le conducteur souhaite, par exemple, redresser les roues pour les aligner avec l'axe longitudinal du véhicule ou, à l'inverse, lorsque le véhicule est stationné sur un terrain pentu et/ou accidenté et que le conducteur, par mesure de précaution supplémentaire, souhaite tourner les roues dans une position sécurisée différente de la position alignée avec l'axe longitudinal du véhicule. Cette position sécurisée peut éventuellement être proposée par le véhicule via l'unité de traitement, ou alors prédéfinie par le conducteur via une interface graphique.

Selon une variante avantageuse, le procédé selon l'invention comprend une étape de détection d'au moins un obstacle, préalablement à la première étape. L'obstacle est, par exemple, une bordure de trottoir ou même la chaussée, obstacle par rapport auquel le conducteur souhaite aligner les roues de son véhicule. Comme il a été indiqué plus haut, l'axe de référence peut alors être défini, par l'unité de traitement, selon une direction d'extension de cet obstacle (direction de la bordure de trottoir, ou direction de l'axe de la chaussée).

Dans ce cas, le signal lumineux généré durant la quatrième étape peut aussi être représentatif de la position angulaire relative de l'obstacle par rapport à ladite position de référence.

Enfin, selon une autre variante encore du procédé selon l'invention, la position angulaire de l'obstacle par rapport à la position de référence peut être calculée par l'unité de traitement, qui peut alors en déduire une orientation relative de la roue du véhicule et dudit obstacle par rapport à la position de référence. Cette étape de calcul est préférentiellement réalisée entre la troisième et la quatrième étape. Consécutivement, les positions relatives de l'au moins une roue et de l'obstacle par rapport à la position de référence peuvent être déduites par l'unité de traitement ; et le signal lumineux généré étant aussi représentatif des différences angulaires entre ladite au moins une roue et de l'obstacle par rapport à ladite position de référence.

Selon un autre aspect de l'invention, il est proposé un véhicule équipé du dispositif d'aide à la conduite selon l'invention et/ou mettant en oeuvre le procédé d'aide à la conduite selon l'invention.

D'autres caractéristiques et avantages de la présente invention apparaitront plus clairement à l'aide de la description qui suit et des dessins parmi lesquels :
- la figure 1 illustre schématiquement le fonctionnement du dispositif selon l'invention dans un premier mode de définition de la position de référence,
- la figure 2 illustre schématiquement le fonctionnement du dispositif selon l'invention dans un deuxième mode de définition de la position de référence,
- les figures 3a, et 3b illustrent un mode de réalisation de l'invention dans lequel l'axe de référence est choisi sur le véhicule, ainsi que diverses possibilités d'affichage du signal lumineux sur le volant de direction de ce véhicule en fonction du mode de définition de la position de référence choisi,
- et la figure 4 illustre un mode de réalisation de l'invention dans lequel la position de référence est définie par rapport à un obstacle détecté par le dispositif selon l'invention.

Il est tout d'abord à noter que si les figures exposent l'invention de manière détaillée pour sa mise en oeuvre, elles peuvent bien entendu servir à mieux définir l'invention le cas échéant. Il est également à noter que, sur l'ensemble des figures, les éléments similaires et/ou remplissant la même fonction sont indiqués par le même repère. Enfin, sur l'ensemble des figures, le véhicule 1 équipé d'un dispositif selon l'invention est schématiquement représenté en vue de dessus : sa direction longitudinale est représentée par la direction de l'axe (Ox) d'un repère orthonormé illustré sur les figures, et sa direction transversale est représentée par la direction de l'axe (Oy) de ce même repère orthonormé.

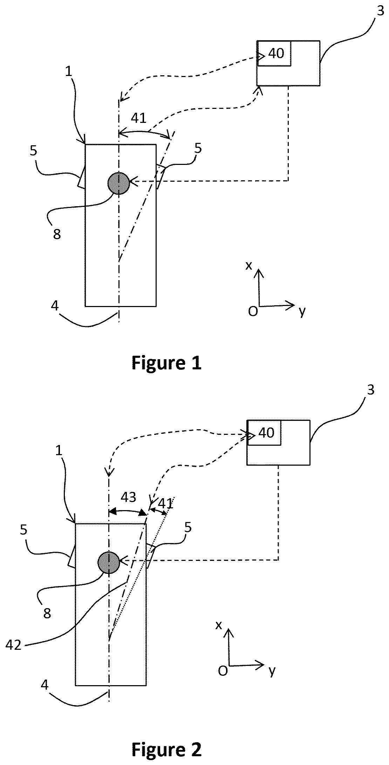

En référence aux figures 1 et 2, le dispositif selon l'invention comporte une unité de traitement 3 configurée pour définir une position de référence 40 d'au moins une roue 5 d'un véhicule 1, et pour calculer la position angulaire relative de cette roue 5 par rapport à la position de référence 40. Selon l'invention, l'unité de traitement 3 est également configurée pour générer, au sein de l'habitacle du véhicule 1, un signal 8 représentatif de la position angulaire de ladite au moins une roue 5 par rapport à la position de référence 40.

Plus précisément, l'unité de traitement 3 est configurée pour définir un axe de référence 4 à partir duquel l'unité de traitement 3 définit la position de référence 40. En référence aux figures 1 et 2, l'axe de référence 4 est défini comme étant confondu avec l'axe d'extension longitudinale (Ox) du véhicule 1.

Selon le mode de réalisation illustré par la figure 1, la position de référence 40 est définie par la position de l'axe de référence 4. En d'autres termes, la position de référence 40 de l'une au moins des roues 5 est ici définie lorsque ladite au moins une roue est parallèle avec l'axe de référence 4. Selon ce mode de réalisation, l'unité de traitement 3 est configurée pour calculer l'angle 41 existant entre la roue 5 et l'axe de référence 4 et pour générer, au sein de l'habitacle du véhicule 1, un signal 8 représentatif de la valeur de cet angle 41. Ces différentes opérations impliquent que l'unité de traitement 3 comporte des moyens de reconnaissance de la position angulaire de la roue 5 par rapport au véhicule : ces moyens de reconnaissance de la position angulaire de la roue peuvent, à titre d'exemples non exhaustifs, inclure un ou plusieurs capteurs placés sur l'ensemble de direction du véhicule 1 ou sur le volant de direction de celui-ci. Alternativement ou complémentairement, le système de détection d'obstacles inclut et/ou met en oeuvre des moyens de localisation par satellite.

Selon le mode de réalisation illustré par la figure 2, la position de référence 40 est définie par la direction d'une droite 42 formant, avec l'axe de référence 4, un angle prédéfini 43. La position de référence 40 de la roue 5 est alors obtenue, dans ce cas, lorsque ladite au moins une roue est parallèle avec la direction de la droite 42. Un exemple d'application particulièrement avantageux d'un tel choix de la position de référence est le cas d'un stationnement du véhicule 1 sur une chaussée dont la pente s'étend selon la direction longitudinale (Ox) dudit véhicule 1. Le conducteur pourra alors souhaiter, par mesure de précaution supplémentaire, orienter ses roues 5 selon un angle 43 par rapport à la direction de plus grande pente. Dans ce cas, le dispositif selon l'invention comporte avantageusement une interface de dialogue 7 (non représentée sur les figures) configurée pour communiquer avec l'unité de traitement 3 et par le biais de laquelle le conducteur lui-même pourra définir la valeur de l'angle 43.

Quel que soit le mode de définition de la position de référence 40, l'unité de traitement 3 est configurée pour générer, au sein de l'habitacle du véhicule 1, un signal 8 représentatif de la position angulaire 41 d'au moins une des roues 5 par rapport à la position de référence 40. Selon un mode de réalisation préféré de l'invention, le signal 8 est un signal lumineux. Avantageusement, ce signal lumineux 8 est visible en une région de l'habitacle située dans le champ de vision du conducteur lorsque celui-ci effectue sa manoeuvre. Selon un mode de réalisation privilégié de l'invention, le signal lumineux 8 est visible sur le volant de direction 9 du véhicule 1. Selon des modes de réalisation alternatifs, il peut être, par exemple, visible sur une région sensiblement centrale de la planche de bord, face au conducteur, ou il peut être projeté sur le pare-brise du véhicule 1 par le biais d'un système tel que ceux connus sous la dénomination de "vision tête haute". Selon différents modes de réalisation de l'invention, le signal lumineux 8 peut être émis ou projeté en la région dans laquelle il est visible.

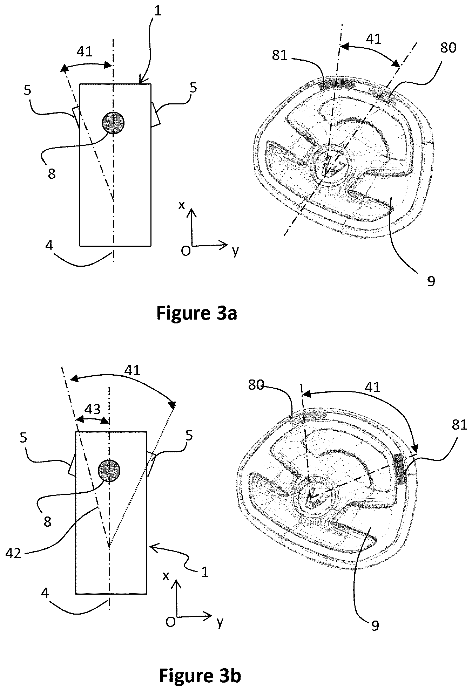

Les figures 3a et 3b illustrent différentes configurations possibles du signal lumineux 8 en fonction de la position angulaire 41 d'au moins une roue 5. L'exemple illustré par la figure 3a est celui d'un mode de réalisation dans lequel la position de référence 40 est définie par l'alignement de l'une des roues 5 au moins sur l'axe de référence 4, ici défini comme l'axe longitudinal (Ox) du véhicule 1. Le signal lumineux 8 est ici visible sur le volant de direction 9, et il prend différentes couleurs selon la valeur de la position angulaire 41 de la roue 5 par rapport à la position de référence 40. Éventuellement, un autre paramètre du signal lumineux pourrait être modifié en fonction de la position angulaire de la roue par rapport à la position de référence, tel que par exemple une intensité lumineuse.

Dans l'exemple illustré sur la figure 3a, lorsque la roue 5 est alignée avec l'axe de référence 4, c'est-à-dire, ici, lorsque la roue 5 est alignée avec la direction longitudinale (Ox) du véhicule 1, le signal lumineux prend une première couleur 80, arbitrairement définie. Par exemple, cette couleur pourra être verte, pour indiquer que la position angulaire de la roue 5 est dans une plage de valeurs considérées comme correctes au regard de la position de référence 40. Inversement, lorsque la roue 5 forme, avec la position de référence 40, un angle 41 non nul, le signal lumineux prend une deuxième couleur 81, différente de la première couleur 80. Par exemple, cette couleur pourra être rouge, indiquant que la position angulaire de la roue 5 est dans une plage de valeurs trop éloignée des valeurs considérées comme correctes au regard de la position de référence 40. Pour générer ces différentes couleurs, l'unité de traitement 3 comporte avantageusement, par exemple, un ensemble de diodes électroluminescentes du type LED.

Selon le mode de réalisation illustré par les figures 3a et 3b, la position angulaire du signal lumineux 8 sur le volant de direction 9 varie également en fonction de la position angulaire de la roue 5 par rapport à la position de référence 40. Selon une première variante de réalisation, le signal lumineux 8 peut ainsi être affiché à une position angulaire, sur le volant de direction, sensiblement égale à la valeur de l'angle 41 entre la roue 5 et la position de référence 40. Selon une autre variante de réalisation, le signal lumineux 8 peut être simplement affiché, sur le volant de direction 9, dans un quadrant représentatif, pour le conducteur, du sens dans lequel il devra tourner la roue 5 pour l'amener à la position de référence 40. Dans ce sens, selon un mode de réalisation avantageux, le signal lumineux 8 comporte une première composante, préférentiellement fixe sur le volant de direction 9, représentant la position de référence 40, et une deuxième composante, dont l'emplacement d'affichage varie sur le volant de direction 9, représentant la position angulaire de la roue 5 relativement à la position de référence 40.

Dans l'exemple illustré par la figure 3b, l'axe de référence 4 est, comme dans l'exemple illustré par la figure 3a, confondu avec l'axe longitudinal (Ox) du véhicule 1, mais la position de référence 40 est ici représentée par une direction 42 formant un angle 43 avec l'axe de référence 4. Le signal lumineux indiquant que la position angulaire de la roue 5 par rapport à la position de référence 40 est dans une plage de valeurs considérées comme correcte est alors visible, sur le volant de direction 9, en une position angulaire représentative de l'écart entre l'axe de référence et la position de référence 40.

Les exemples illustrés par les figures 3a et 3b correspondent, par exemple, au cas d'un véhicule 1 en stationnement, et dont le conducteur veut disposer les roues 5 selon une position angulaire prédéfinie relativement au véhicule 1 lui-même : véhicule en stationnement dont le conducteur veut redresser les roues pour les aligner avec l'axe longitudinal du véhicule, ou véhicule en stationnement dont le conducteur veut, à l'inverse, orienter les roues selon un angle prédéfini par rapport à l'axe longitudinal dudit véhicule.

Alternativement ou complémentairement, le signal lumineux est affiché sur une partie immobile du volant de direction, tel que le moyeu par exemple et/ou du tableau de bord, et/ou une partie du pare-brise et/ou du dispositif de projection tête haute. Le signal lumineux représente alors de manière avantageuse l'angle défini entre la position des roues 5 par rapport à l'axe de référence. En particulier, lorsque le signal lumineux prend la forme d'un bandeau lumineux rectiligne, une dimension longitudinale dudit bandeau est configurée pour représenter la position angulaire des roues par rapport à l'axe de référence : lorsque les roues sont tournées par rapport à cet axe de référence, alors la dimension longitudinale du bandeau est modifiée de manière à représenter la variation angulaire des roues par rapport à l'axe de référence. Alternativement, lorsque le signal lumineux prend la forme d'un bandeau lumineux sous la forme d'un secteur angulaire, une dimension radiale dudit secteur angulaire est configurée pour représenter la position angulaire des roues par rapport à l'axe de référence : lorsque les roues sont tournées par rapport à cet axe de référence, alors la dimension du secteur angulaire est modifiée de manière à représenter la variation angulaire des roues par rapport à l'axe de référence.

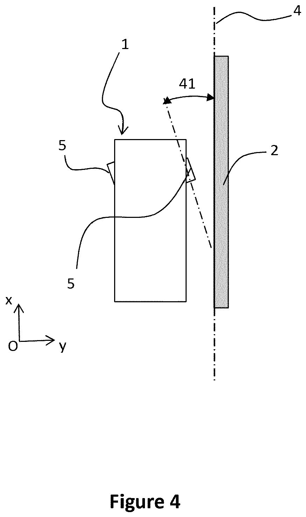

La figure 4 illustre un mode de réalisation de l'invention dans lequel il est recherché de positionner angulairement l'une au moins des roues 5 du véhicule 1 par rapport à un élément fixe de l'environnement dudit véhicule 1, par exemple, une bordure de trottoir. L'élément d'environnement est ici considéré comme un obstacle 2 par rapport auquel le véhicule 1 doit se placer et doit placer au moins l'une de ses roues 5 selon une position de référence 40. Dans ce cas, le dispositif selon l'invention comporte avantageusement un système de détection d'obstacle, par exemple un système mettant en oeuvre un ou plusieurs capteurs optiques. Dans ce cas également, l'unité de traitement 3 est avantageusement configurée pour définir l'axe de référence 4 comme une direction caractéristique de l'obstacle 2. Dans l'exemple illustré par la figure 4, dans lequel l'obstacle 2 est une bordure de trottoir sensiblement rectiligne, l'axe de référence 4 est ainsi défini comme étant confondu avec la direction d'extension de cette bordure de trottoir 2. Dans le cas où l'obstacle 2 serait une bordure de trottoir courbe, l'axe de référence 4 pourrait être défini comme la tangente à la courbure de cette bordure de trottoir 2 dans la région dans laquelle le véhicule 1 doit se placer contre ladite bordure de trottoir.

L'unité de traitement 3 est alors configurée pour définir la position de référence 40 à partir de l'axe de référence 4 choisi sur un élément extérieur au véhicule. A cette fin, l'unité de traitement 3 comporte avantageusement des moyens de localisation de l'obstacle 2, par exemple des moyens de localisation par satellite tels que ceux utilisés par ailleurs pour l'assistance à la navigation du véhicule. La génération du signal lumineux 8 et les modes d'affichages de ce signal lumineux 8 représentatif de la position angulaire d'au moins une roue 5 par rapport à la position de référence 40 sont alors similaires à ceux décrits ci-dessus pour les exemples de réalisation illustrés par les figures 3a et 3b.

L'invention permet ainsi au conducteur d'un véhicule 1 de disposer rapidement et de manière intuitive d'une information sur la position angulaire d'une ou plusieurs roues de son véhicule au regard du véhicule lui-même ou au regard d'un obstacle extérieur au véhicule. Les situations de conduite dans lesquelles l'invention trouve une application intuitivement privilégiée sont, de manière évidente, celles de l'aide au stationnement.

Ainsi, comme il a été évoqué précédemment, lorsque le véhicule sera stationné, le conducteur pourra en orienter les roues selon une direction prédéfinie. Mais l'invention trouve également une application particulièrement intéressante lors des manoeuvres même de stationnement. En effet, dans le cas d'un véhicule 1 en cours de stationnement le long d'un obstacle 2 dont une direction caractéristique est choisie comme axe de référence 4 pour la définition de la position de référence 40, le conducteur disposera d'une information précieuse le guidant dans ses différentes manoeuvres.

Ainsi, comme il a été évoqué précédemment, l'invention s'étend également à différents procédés d'aide au stationnement d'un véhicule 1 équipé d'un dispositif selon l'invention.

Une première variante d'un tel procédé se rapporte principalement au cas où la position de référence 40 est définie par rapport au véhicule lui-même, c'est-à-dire au cas dans lequel l'axe de référence 4 est choisi sur le véhicule 1 lui-même. Dans ce cas, le procédé selon l'invention comporte principalement :
- une première étape de définition de l'axe de référence 4 : l'axe de référence 4 peut être prédéfini, par le constructeur, au sein de l'unité de traitement, ou il peut être défini par le conducteur lui-même, par le biais d'une interface de dialogue 7 configurée pour communiquer avec l'unité de traitement 3.
- une deuxième étape de définition, au sein de l'unité de traitement 3, de la position de référence 40 : là encore, une ou plusieurs positions de référence peuvent être prédéfinies, par le constructeur, et choisies par le conducteur au moyen de l'interface de dialogue 7, ou la position de référence 40 peut être directement définie par le conducteur lui-même, par le biais de cette même interface de dialogue 7 configurée pour communiquer avec l'unité de traitement 3.
- une troisième étape de calcul, par l'unité de traitement 3, de la position angulaire 41 d'au moins une des roues 5 du véhicule 1 par rapport à la position de référence 40 : dans cette étape, l'unité de traitement 3 recevra, par exemple, l'information de position angulaire de la roue 5 par l'intermédiaire de capteurs appropriés placés sur l'ensemble de direction et/ou sur le volant de direction du véhicule, ou elle recevra, par exemple, cette information par le biais de moyens de localisation par satellite dont elle sera équipée,
- une quatrième étape de génération, au sein de l'habitacle du véhicule 1, du signal lumineux 8 représentatif de la position angulaire 41 de la roue 5 par rapport à la position de référence 40 : les différentes configurations de ce signal lumineux, évoquées plus haut, peuvent être mises en oeuvre selon différentes versions du procédé.

Un tel procédé, qui comporte un nombre réduit d'étapes, est d'une mise en oeuvre simple sur un véhicule par ailleurs déjà équipé d'une ou plusieurs unités de traitement et de contrôle comme c'est le cas de la plupart des véhicules actuels.

Dans une autre variante d'un tel procédé, qui se rapporte principalement au cas où la position de référence 40 est définie par rapport à un obstacle 2 détecté dans l'environnement du véhicule, le procédé selon l'invention, outre les quatre étapes précédemment citées, comportera une étape préalable de détection de l'obstacle 2. Il pourra également comporter une étape éventuelle de calcul, au sein de l'unité de traitement 3, de la position angulaire de l'obstacle 2 par rapport à la position de référence 40 et une étape de déduction de la position angulaire relative de la roue 5 et de l'obstacle 2 par rapport à la position de référence 40. Dans ce cas, le signal lumineux 8 généré sera avantageusement représentatif de cette position relative de la roue 5 et de l'obstacle 2 par rapport à la position de référence 40. Un tel procédé peut, par exemple, trouver une application intéressante au cas où le conducteur du véhicule souhaite placer ses roues selon un angle prédéfini au regard d'un obstacle lors d'une opération de stationnement.

Le procédé selon l'invention permet ainsi d'apporter une aide simple et efficace au conducteur lors de manoeuvres variées.

L'invention ne saurait toutefois se limiter aux moyens et configurations décrits et illustrés, et elle s'applique également à tous moyens ou configurations équivalents et à toute combinaison de tels moyens. Ainsi, si l'invention et les procédés qu'elle couvre ont principalement été décrits dans le cadre d'une application au stationnement, il va de soi qu'elle ne se limite pas à de telles applications.

## Revendications

1. Dispositif d'aide à la conduite d'un véhicule automobile (1) **caractérisé en ce qu'**il comprend une unité de traitement (3) configurée pour calculer la position angulaire (41) d'au moins une roue (5) du véhicule (1) par rapport à une position angulaire de référence (40) et pour générer un signal lumineux (8) représentatif de la position angulaire de ladite au moins une roue (5) par rapport à la position de référence (40).

2. Dispositif d'aide à la conduite selon la revendication 1, **caractérisé en ce que** la position de référence (40) est définie par l'alignement de ladite au moins une roue (5) avec un axe de référence (4) prédéfini.

3. Dispositif d'aide à la conduite selon la revendication 2, **caractérisé en ce que** la position de référence (40) est définie par l'alignement de ladite au moins une roue (5) avec une direction de référence (42) formant un angle (43) prédéfini avec l'axe de référence (4).

4. Dispositif d'aide à la conduite selon l'une quelconque des revendications 2 ou 3, **caractérisé en ce que** l'axe de référence (4) est défini par l'unité de traitement (3) comme étant l'une des directions d'extension du véhicule (1).

5. Dispositif d'aide à la conduite selon l'une quelconque des revendications précédentes, **caractérisé en ce qu'**il comporte un système (6) de détection d'un obstacle (2).

6. Dispositif d'aide à la conduite selon la revendication précédente, en combinaison avec l'une des revendications 2 à 4, **caractérisé en ce que** l'axe de référence (4) est défini par l'unité de traitement (3) comme étant une direction caractéristique de l'obstacle (2).

7. Dispositif d'aide à la conduite selon l'une quelconque des revendications précédentes, **caractérisé en ce que** la position de référence (40) est définie par l'unité de traitement (3) sur la base d'une information communiquée par le conducteur du véhicule (1) par le biais d'une interface de dialogue (7).

8. Dispositif d'aide à la conduite selon l'une quelconque des revendications précédentes, **caractérisé en ce que** le signal lumineux (8) est visible sur un volant de direction (9) du véhicule.

9. Dispositif d'aide à la conduite selon l'une quelconque des revendications précédentes, **caractérisé en ce que** le signal lumineux (8) est visible depuis une région de l'habitacle du véhicule (1) située dans le champ de vision du conducteur.

10. Dispositif d'aide à la conduite selon l'une quelconque des revendications précédentes, **caractérisé en ce que** le signal lumineux (8) est angulairement placé en une région représentative du sens du décalage angulaire entre ladite au moins une roue (5) et la position de référence (40).

11. Dispositif d'aide à la conduite selon l'une quelconque des revendications précédentes, **caractérisé en ce que** le signal lumineux (8) revêt une première couleur (80) lorsque le décalage angulaire entre ladite au moins une roue (5) et la position de référence (40) se situe dans une première plage de valeurs et une deuxième couleur (81) lorsque le décalage angulaire entre ladite au moins une roue (5) et la position de référence (40) se situe dans une deuxième plage de valeurs.

12. Dispositif d'aide à la conduite selon l'une quelconque des revendications précédentes, **caractérisé en ce que** le signal lumineux (8) comporte une première partie représentative de la position de référence (40) et une deuxième partie représentative de la position angulaire (41) de ladite au moins une roue (5) par rapport à ladite position de référence (40).

13. Procédé d'aide à la conduite d'un véhicule automobile (1) équipé d'un dispositif d'aide à la conduite selon l'une quelconque des revendications précédentes, ledit procédé comportant :
- une première étape de définition par l'unité de traitement (3) de l'axe de référence (4),
- une deuxième étape de définition par l'unité de traitement (3) de la position de référence (40),
- une troisième étape de calcul par l'unité de traitement (3) de la position angulaire d'au moins une roue (5) par rapport à la position de référence (40),
- une quatrième étape de génération, au sein de l'habitacle du véhicule (1), d'un signal lumineux (8) représentatif de la position angulaire de ladite au moins une roue (5) par rapport à ladite position de référence (40).

14. Procédé d'aide à la conduite selon la revendication précédente, ledit procédé comportant une étape de détection d'un obstacle (2) préalable à la première étape, le signal lumineux (8) généré durant la quatrième étape étant aussi représentatif de la position angulaire relative de l'obstacle (2) par rapport à ladite position de référence (40).

15. Procédé d'aide à la conduite selon la revendication précédente, **caractérisé en ce qu'**il comporte une étape de calcul par l'unité de traitement (3) de la position angulaire de l'obstacle (2) par rapport à la position de référence (40), ladite étape de calcul étant située entre la troisième et la quatrième étape, une étape de déduction des positions relatives de ladite au moins une roue (5) et de l'obstacle (2) par rapport à la position de référence (40), le signal lumineux (8) généré étant aussi représentatif desdites différences angulaires entre ladite au moins une roue (5) et l'obstacle (2) par rapport à ladite position de référence (40).

16. Véhicule automobile (1) équipé d'un dispositif d'aide à la conduite selon l'une quelconque des revendications 1 à 12.
